(19) Europäisches Patentamt / European Patent Office / Office européen des brevets

(11) EP 1 742 078 B1

(12) FASCICULE DE BREVET EUROPEEN

(45) Date de publication et mention de la délivrance du brevet:
**02.03.2011 Bulletin 2011/09**

(51) Int Cl.:
***G01S 3/54*** *(2006.01)* ***G01S 13/82*** *(2006.01)*

(21) Numéro de dépôt: **06114743.5**

(22) Date de dépôt: **31.05.2006**

# (54) Dispositif de localisation de véhicule par transmission radiofréquence

Fahrzeug Ortungsgerät mit Senden von Mikrowellen

Vehicle localisation device using radiowave transmission

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **28.06.2005 FR 0506604**

(43) Date de publication de la demande:
**10.01.2007 Bulletin 2007/02**

(73) Titulaire: **Valeo Sécurité Habitacle**
**94046 Créteil Cedex (FR)**

(72) Inventeurs:

- **Masson, Fabienne**
  **c/o Valeo Securité Habitacle**
  **94042 Créteil (FR)**
- **Picheral, José**
  **c/o Valeo Securité Habitacle**
  **94042 Créteil (FR)**
- **Cachon, Ronan**
  **c/o Valeo Securité Habitacle**
  **94042 Créteil (FR)**
- **Deyla, Olivier**
  **c/o Valeo Securité Habitacle**
  **94042 Créteil (FR)**
- **Pepin, Mathieu**
  **c/o Valeo Securité Habitacle**
  **94042 Créteil (FR)**

(74) Mandataire: **Jacquot, Ludovic R. G. et al**
**Valeo Sécurité Habitacle**
**Service Propriété Industrielle**
**76 Rue Auguste Perret**
**ZI Europarc**
**94046 Créteil Cedex (FR)**

(56) Documents cités:
**EP-A- 1 113 523**
**WO-A-02/073562**
**WO-A-2004/027921**
**DE-A1- 10 063 971**
**DE-A1- 10 235 132**
**DE-A1- 19 938 951**
**FR-A- 2 805 614**
**US-A1- 2003 117 318**
**US-B1- 6 386 007**
**US-B1- 6 590 534**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 742 078 B1

Printed by Jouve, 75001 PARIS (FR)

## Description

La présente invention concerne un dispositif de localisation de véhicule par transmission radiofréquence.

Elle convient tout particulièrement à la localisation de véhicule automobile en milieu confiné, et notamment dans des parkings automobiles souterrains, en prenant en compte les contraintes d'intégration dans une clé automobile.

D'une façon générale, on sait que pour obtenir ce résultat, la réponse technique habituelle consiste à équiper la clé automobile d'un émetteur/récepteur radiofréquence permettant selon la voie montante (de la clé vers le véhicule automobile) de déclencher à bord du véhicule automobile une émission radiofréquence omnidirectionnelle, puis grâce au récepteur radiofréquence intégré dans la clé, de détecter le maximum du signal reçu selon la voie montante (du véhicule vers la clé), permettant ainsi de connaître approximativement la direction selon laquelle le véhicule interrogé se trouve.

L'information obtenue concerne essentiellement la direction. On peut cependant en extraire une estimation en se basant sur la puissance reçue.
Pour obtenir une estimation plus précise, il faut introduire un protocole de synchronisation entre la clé et le véhicule ; cette méthode d'estimation des retards basée soit sur une mesure d'inter corrélation, soit sur des méthodes à haute résolution, nécessite cependant d'importantes capacités de calcul et une acquisition à des fréquences importantes.

Par ailleurs, il est à noter que les réflexions multiples occasionnées par les autres véhicules ainsi que par les éventuelles parois du parking peuvent considérablement gêner la recherche du maximum du signal reçu ; plusieurs maxima peuvent être détectés et le maximum détecté peut ne pas être celui correspondant à la direction réelle selon laquelle le véhicule interrogé se trouve.
Une autre réponse technique consiste à effectuer une répartition des estimations entre le véhicule et la clé afin d'utiliser au mieux les ressources du véhicule (réseau d'antennes de taille suffisante, puissance de calcul).

Selon une première méthode, la direction est estimée dans la clé et la distance dans le véhicule. La clé émet alors de manière directive ou omnidirectionnelle. Le véhicule reçoit cette onde ; en conséquence, il débute le calcul de la distance et transmet cette information en direction du récepteur intégré dans la clé, permettant ainsi au possesseur de la clé de connaître approximativement la distance qui le sépare du véhicule interrogé. Le véhicule émet à son tour de manière omnidirectionnelle et la clé estime alors la direction.

Selon une deuxième méthode, il est également envisageable de faire une estimation de la direction dans la voiture. Ce calcul pouvant être entaché de fortes erreurs (aberrations dues aux réflexions), il interviendrait comme une confirmation plus précise de l'estimation faite par la clé (passer par exemple d'une précision de l'ordre de 70 ° à une précision de l'ordre de 30 °).

Une autre solution consiste à utiliser les réseaux « Assisted » GPS.
Cela consiste à équiper la clé d'un système combinant les technologies GPS/GSM; cette solution nécessite que le possesseur dispose d'un radiotéléphone mobile GSM et que l'emplacement du véhicule soit connu.
Il faut néanmoins noter que cette solution, basée sur l'exploitation du réseau GPS, n'est pas applicable dans un parking souterrain.

On connaît également d'autres systèmes de localisation de véhicules par transmission aérienne selon WO 02/073562, par radiogoniométrie selon FR 2805614, ou par l'intermédiaire d'un localisateur électronique selon US 6690534.

L'invention a donc plus particulièrement pour but de supprimer ces inconvénients.

Elle propose donc un dispositif de localisation de véhicule par transmission radiofréquence destiné à connaître la direction selon laquelle le susdit véhicule interrogé se trouve, basée sur l'estimation, par le susdit dispositif, des directions d'arrivée des différentes réflexions du signal en provenance d'une émission radiofréquence omnidirectionnelle générée par un émetteur situé à bord du susdit véhicule et préalablement déclenchée à distance par le susdit dispositif, caractérisé en ce que le susdit dispositif de localisation comprend un réseau d'antennes intégré, selon la revendication 1.

Avantageusement, le susdit réseau d'antennes intégré pourra comprendre une antenne dite principale associée à une pluralité d'antennes dites parasites ; le couplage de chacune desdites antennes parasites avec ladite antenne principale est fonction de l'impédance associée à chacune desdites antennes parasites ; l'impédance de chacune desdites antennes parasites pourra être modifiée par la commutation d'une diode PIN permettant de positionner l'antenne parasite soit en court-circuit avec la masse du réseau d'antennes soit en circuit ouvert vis-à-vis de la même masse ; ainsi, ladite antenne parasite en court-circuit avec ladite masse fonctionnera comme un réflecteur ; en circuit ouvert ladite antenne parasite n'aura qu'une faible incidence sur le diagramme de rayonnement de la susdite antenne principale.

Avantageusement, le susdit réseau d'antenne intégré pourra comprendre une antenne principale et quatre antennes parasites disposées perpendiculairement à un plan de référence selon un demi-cercle, l'antenne principale étant située au voisinage du centre du demi-cercle, l'angle contenu dans le plan de référence séparant chacune des quatre antennes parasites étant de $\pi/3$ ; d'autre part, un plan dit réflecteur pourra être disposé, perpendiculairement au plan de référence, parallèlement au grand diamètre du demi-cercle défini en son centre par l'antenne principale et en ses deux extrémités par les deux antennes parasites extrêmes.

Avantageusement, le susdit réseau d'antenne intégré pourra comprendre une antenne principale et six antennes parasites disposées perpendiculairement à un plan de référence selon un demi-cercle, l'antenne principale étant située au voisinage du centre du demi-cercle, l'angle contenu dans le plan de référence définissant la position de chacune desdites antennes parasites par rapport au grand diamètre du demi-cercle étant respectivement de 0, $\pi/6$, $\pi/3$, $2\pi/3$, $5\pi/6$, $\pi$. Par ailleurs, cette structure ne comportera pas de plan réflecteur.

L'estimation de la direction est effectuée en maximisant un critère ; seul le critère à maximiser diffère selon la méthode utilisée ; trois méthodes ont été exploitées : la méthode dite "formation de voies", la méthode dite "CAPON", et la méthode dite "MUSIC".
Par ailleurs, on suppose connus les diagrammes de réception de chaque configuration d'antennes parasites ; ceci nécessite en pratique un calibrage et une mémorisation de ces valeurs lors de la conception du réseau d'antennes intégré.

Soit K le nombre de configurations de mesure obtenues par différentes combinaisons des impédances associées aux antennes dites parasites, on note alors $\{y_k(t)\}_{k=1..K}$ les signaux mesurés dans chacune de ces K configurations.

Soit M le nombre de trajets incidents $\{S_m(t)\}_{m=1..M}$ venant des directions $\{\theta_m\}m=1..M$.

On suppose que les K mesures sont réalisées dans un temps suffisamment court pour que $S_m(t)$ soit constant.
Alors, chaque signal mesuré est la somme pondérée, par le gain de l'antenne pour la configuration considérée et dans la direction de chacun des trajets, des signaux émis, avec des retards différents $t_m$, auxquels s'ajoute un bruit gaussien n.

La méthode dite de la "formation de voies" a été développée pour des réseaux d'antennes linéaires, elle consiste à contrôler numériquement la directivité et la direction privilégiée de l'antenne. Le même principe peut être utilisé dans le cas des antennes parasites ; ainsi, on réalise, par pondération et sommation des signaux mesurés sur les différents capteurs, un filtrage spatial qui permet de privilégier ou d'éliminer certaines composantes spatiales du signal reçu.

La méthode dite "CAPON", également appelée méthode de la variance minimum, est proposée dans le but de résoudre les problèmes de résolution de la formation de voies. Cette faible résolution est en effet due au fait que la puissance dans une direction donnée, pour la formation de voies, dépend non seulement de la puissance de la source à cette direction, mais aussi des contributions d'autres sources. Ainsi le but de la méthode "CAPON" est de minimiser les interférences.

La méthode MUSIC (MUltiple SIgnal Classification) a pour avantage de séparer les trajets multiples, et donc de permettre une estimation de meilleure qualité en présence de nombreux trajets multiples. Cette propriété est intéressante dans le cas présent car le nombre de réflexions et donc de trajets multiples peut être important.
Cette méthode utilise les sous-espaces propres de la matrice de covariance empirique de l'échantillon $\hat{R}$. Dans le cas où le signal reçu comporte M trajets, alors la décomposition en valeurs propres de $\hat{R}$ permet d'obtenir les bases $E_s$ du sous-espace propre du signal utile, de dimensions $M$, et $E_B$ du sous-espace propre du bruit, de dimensions $K$-$M$.

Concernant la méthode "formation de voies", quel que soit le niveau de bruit, le taux d'erreur reste élevé, ce qui confirme la non adaptation de cette méthode à la problématique du cas présent.
La méthode "CAPON" donne des résultats satisfaisants même pour des niveaux de bruit importants, mais détecte très souvent des maxima secondaires.
En revanche, concernant la méthode "MUSIC", pour des niveaux de bruit inférieurs à 40 dB, le taux d'erreurs est quasi nul et la probabilité de détecter un maximum secondaire est faible.

L'estimation de la distance peut être effectuée selon deux méthodes:

- une estimation de la distance à partir de la puissance reçue,
- une estimation de la distance à partir du temps de propagation.

La méthode consistant à effectuer l'estimation de la distance à partir de la puissance reçue est très approximative ; en effet, la puissance reçue dépend de la distance mais également des réflexions et du milieu environnant ; ainsi cette méthode ne donnera simplement qu'un ordre de grandeur de la distance, par exemple :

- véhicule proche (< 100 m),
- véhicule lointain (entre 100 m et 500 m),
- véhicule très lointain (> 500m).

Les seuils de puissance permettant l'identification des intervalles de distance restent à définir précisément mais on peut malgré tout, à partir des mesures réalisées, donner des ordres de grandeur, pour un niveau d'émission de 10 dBm:

- $P_{max} > -60$ dBm : véhicule proche,
- $-90$ dBm $< P_{max} < -60$ dBm : véhicule lointain,
- $P_{max} < -90$ dBm : véhicule très lointain.

Il faut noter que l'estimation de la distance à partir de la puissance reçue peut être fortement perturbée selon les diverses configurations de recherche du véhicule.

La méthode consistant à effectuer l'estimation de la distance à partir du temps de propagation implique de déterminer avec précision le temps de propagation $\Delta\tau$ entre le véhicule et la clé.
On peut estimer cette valeur en recherchant le maximum de la fonction d'inter corrélation entre le signal de référence g(t) et le signal reçu r(t), la fonction d'inter corrélation étant interpolée autour de son maximum afin d'améliorer la précision de l'estimation.
En considérant que le véhicule devra émettre le signal de référence, avant chaque séquence de données codées, afin de permettre l'identification et l'estimation de $\Delta t$ au niveau de la clé, soit :

$$r(t) = g(t - \tau) + n(t)$$

- r(t) est le signal reçu,
- g(t) est le signal de référence,
- n(t) est le bruit gaussien, et
- $\tau$ est le temps de propagation.

Ainsi, le maximum de l'inter corrélation permettra de déterminer le temps de propagation.
En effet, pour une précision de l'estimation de la distance de 10 m, le temps de propagation correspondant est de 30 ns. Pour estimer le temps de retard avec une précision de l'ordre de $\tau$ =30 ns (en tenant compte de l'interpolation de la fonction d'inter corrélation) la fréquence d'échantillonnage requise est de l'ordre de $Fe$=1/10$\tau$, soit pour une précision de 10m de $Fe$=3.3MHz.

Néanmoins, les performances de cette méthode sont dégradées en présence de trajets multiples car les trajets multiples introduisent un biais positif dans l'estimation.

Afin d'estimer précisément le temps de propagation, il faut synchroniser les horloges de la clé et du véhicule, afin que l'instant d'émission à partir du véhicule soit connu au niveau de la clé. Cette synchronisation sera effectuée en début de recherche selon le protocole suivant :

- la clé émet un top de synchronisation et déclenche un chronomètre à l'instant $t_o$,
- ce signal est reçu par le véhicule qui émet à son tour à l'instant $t_1$,
- la clé reçoit le signal émis par le véhicule dont elle connaît de plus le temps nécessaire au démarrage de l'émission, appelé $\Delta t_v$. Le chronomètre est alors arrêté. Le temps de propagation $\Delta\tau$ sera donc calculé comme suit :

$$\Delta\tau = (\Delta t - \Delta t_v)/2,$$

avec $\Delta t = t_1 - t_0$ le temps donné par le chronomètre.

Ce temps de propagation permet une première estimation de la distance; toutefois cette estimation doit être mise à jour tout au long de la recherche du véhicule en raison de la dérive de l'horloge interne de la clé.

Deux solutions existent pour estimer la distance :

- transmettre l'horloge du véhicule à la clé afin de déterminer l'écart entre les deux horloges et calculer le temps de propagation véhicule-clé,
- ne pas transmettre l'horloge de la clé, et estimer la distance à partir du calcul précédent en calculant le temps de propagation clé-véhicule-clé.

Un mode d'exécution sera décrit ci-après, à titre d'exemple non limitatif, avec référence aux dessins annexés dans lesquels :

- la figure 1 est une représentation schématique en perspective d'un premier mode de réalisation,
- la figure 2 est une représentation polaire du diagramme de rayonnement à 0 °, selon le premier mode de réalisation,
- la figure 3 est une représentation du paramètre S11 à 0 ° de puissance maximum, selon le premier mode de réalisation,
- la figure 4 est une représentation polaire du diagramme de rayonnement à 20 °, selon le premier mode de réalisation,
- la figure 5 est une représentation du paramètre S11 à 20 ° de puissance maximum, selon le premier mode de réalisation,
- la figure 6 est une représentation polaire du diagramme de rayonnement à 45 °, selon le premier mode de réalisation,
- la figure 7 est une représentation du paramètre S11 à 45 ° de puissance maximum, selon le premier mode de réalisation,
- la figure 8 est une représentation polaire du diagramme de rayonnement à 50 °, selon le premier mode de réalisation,
- la figure 9 est une représentation du paramètre S11 à 50 ° de puissance maximum, selon le premier mode de réalisation,
- la figure 10 est une représentation schématique en perspective d'un second mode de réalisation,
- la figure 11 est une représentation polaire du diagramme de rayonnement à 0 °, selon le deuxième mode de réalisation,
- la figure 12 est une représentation du paramètre S11 à 0 ° de puissance maximum, selon le deuxième mode de réalisation,
- la figure 13 est une représentation polaire du diagramme de rayonnement à 20 °, selon le deuxième mode de réalisation,
- la figure 14 est une représentation du paramètre S11 à 20 ° de puissance maximum, selon le deuxième mode de réalisation,
- la figure 15 est une représentation polaire du diagramme de rayonnement à 45 °, selon le deuxième mode de réalisation,
- la figure 16 est une représentation du paramètre S11 à 45 ° de puissance maximum, selon le deuxième mode de réalisation,
- la figure 17 est une représentation polaire du diagramme de rayonnement à 70 °, selon le deuxième mode de réalisation, et

- la figure 18 est une représentation du paramètre S11 à 70 ° de puissance maximum, selon le deuxième mode de réalisation.

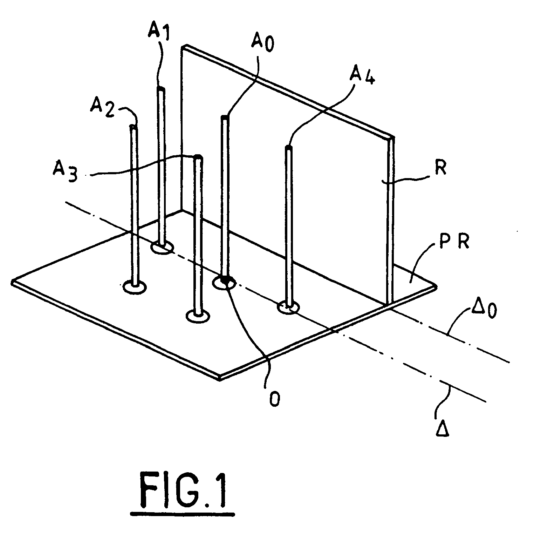

Dans l'exemple représenté sur la figure 1, le dispositif de localisation de véhicule par transmission radiofréquence est représenté schématiquement par un réseau d'antennes intégré selon un premier mode de réalisation.

Il est essentiellement constitué d'un plan de référence PR supportant une antenne principale A0 active, quatre antennes parasites, respectivement A1, A2, A3, A4, et un réflecteur R.

La susdite antenne principale A0 active est normale au plan de référence PR et située en un point 0 ; les quatre susdites antennes parasites, respectivement A1, A2, A3, A4, sont également normales au plan de référence PR et situées sur un demi-cercle de rayon r et de centre 0 ; les susdites antennes parasites A1, A4, sont situées sur un grand axe $\Delta$ passant par le centre 0 ; les susdites antennes parasites A2, A3, sont situées sur le demi-cercle de rayon r, de telle sorte que les angles au sommet 0 séparant les susdites antennes A1, A2, A3, A4, soient égaux entre eux et de valeur égale à $\pi/3$.

L'antenne principale A0 et les quatre antennes A1, A2, A3, A4, ont une longueur égale à L.

Un réflecteur R est disposé perpendiculairement au plan de référence PR, l'axe d'intersection avec ledit plan de référence PR, soit $\Delta 0$, est parallèle audit axe $\Delta$, et situé à l'opposé des susdites antennes parasites A1, A2, A3, A4. La distance séparant les axes $\Delta$ et $\Delta 0$ est égale à d. La hauteur du susdit réflecteur est égale à L.

Ne sont pas représentées sur la figure 1, l'alimentation radiofréquence de l'antenne principale A0, ainsi que les diodes PIN de commutation associées à chacune des susdites antennes parasites A1, A2, A3, A4.

A titre d'exemple, pour une fréquence de fonctionnement de 2,4 GHz, la longueur L est de 31,25 mm, le rayon r est de 15,625 mm, la distance d est de 11,375 mm ; le volume global du réseau d'antennes intégré est de 26,4 $cm^3$.

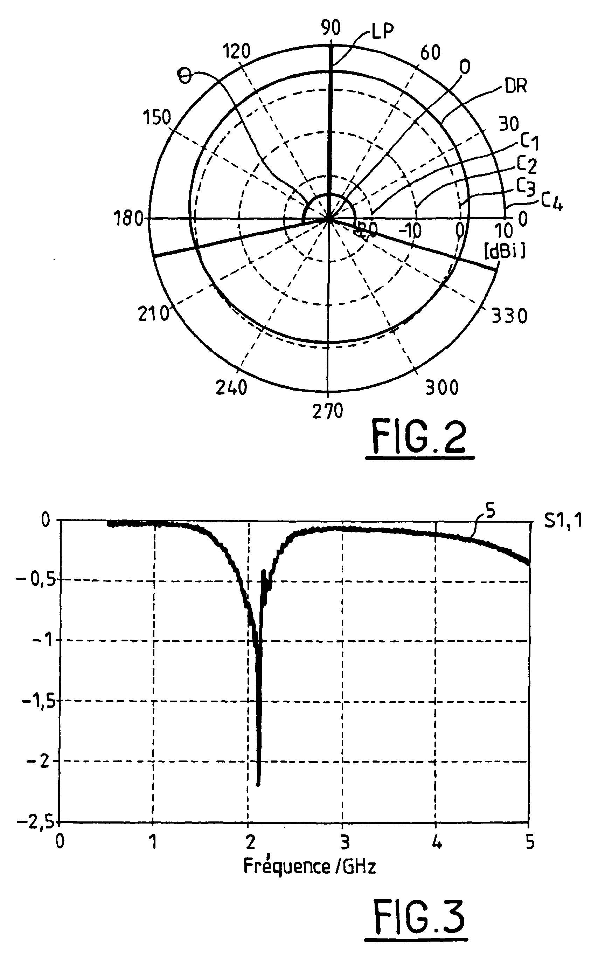

Dans l'exemple représenté sur la figure 2, un diagramme de rayonnement, est constitué d'une part de quatre cercles concentriques, respectivement C1, C2, C3, C4, de centre 0, correspondant respectivement aux niveaux -20 dBi, -10 dBi, 0 dBi, et 10 dBi, et d'autre part de demi-droites d'extrémité 0, dont l'incrément angulaire dans le sens trigonométrique est de 30 degrés ; l'angle 0 degré correspond à la direction orthogonale au réflecteur R, soit la direction pointée par l'opérateur.

Une courbe DR représente le diagramme de rayonnement du réseau d'antennes intégré dans la configuration 0 degré, pour une fréquence de fonctionnement voisine de 2 GHz (2,4 GHz).

Dans le cas présent, la direction de l'axe de symétrie LP du lobe principal est située à 90 degrés, l'amplitude du lobe principal est de 3,2 dBi, et l'ouverture du lobe principal, représenté par l'angle 0 correspondant à une atténuation de 3dB par rapport à l'amplitude du lobe principal, est de 209,4 degrés de part et d'autre du susdit axe de symétrie LP du lobe principal.

Dans l'exemple de la figure 3, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -2,5 dB par pas de 0,5 dB ; la fréquence de fonctionnement est quantifiée en abscisse selon une échelle linéaire de part et d'autre de 2 GHz.

La courbe S représente la variation du paramètre S11 dans la bande de fréquence 0,5 GHz à 5 GHz ; la valeur maximum du paramètre S11 est de -2,2 dB au voisinage de 2 GHz.

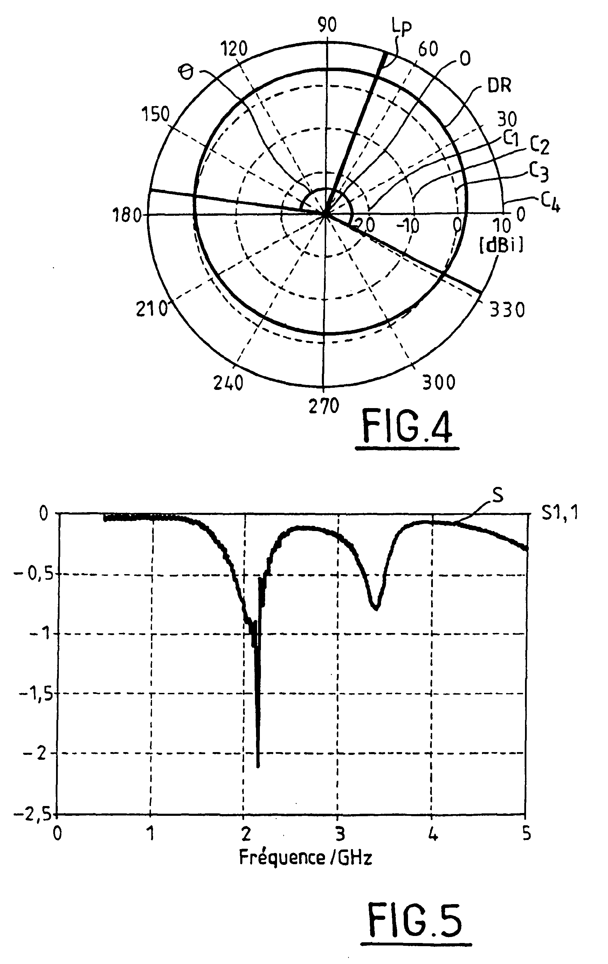

Dans l'exemple représenté sur la figure 4, le repère du diagramme de rayonnement est identique à celui de la figure 2.

Une courbe DR représente le diagramme de rayonnement du réseau d'antennes intégré dans la configuration 20 degrés, pour une fréquence de fonctionnement voisine de 2 GHz.

Dans le cas présent, la direction de l'axe de symétrie LP du lobe principal est située à 70 degrés, l'amplitude du lobe principal est de 3,2 dBi, et l'ouverture du lobe principal, représenté par l'angle $\theta$ correspondant à une atténuation de 3dB par rapport à l'amplitude du lobe principal, est de 199,9 degrés de part et d'autre du susdit axe de symétrie LP du lobe principal.

Dans l'exemple de la figure 5, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -2,5 dB par pas de 0,5dB; la fréquence de fonctionnement est quantifiée en abscisse selon une échelle linéaire de part et d'autre de 2 GHz.

La courbe S représente la variation du paramètre S11 dans la bande de fréquence 0,5 GHz à 5 GHz ; la valeur maximum du paramètre S11 est de -2,1 dB au voisinage de 2 GHz.

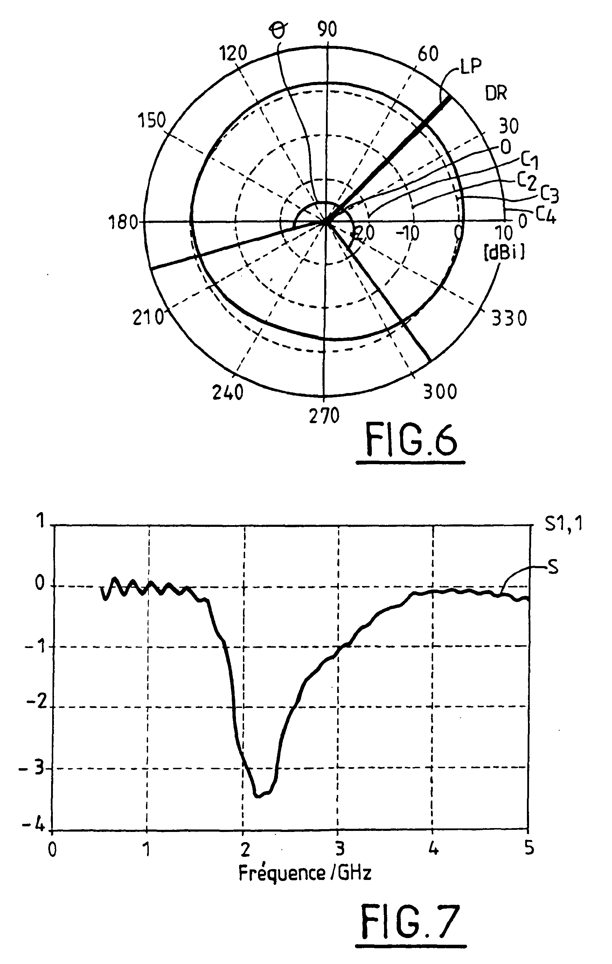

Dans l'exemple représenté sur la figure 6, le repère du diagramme de rayonnement est identique à celui de la figure 2.

Une courbe DR représente le diagramme de rayonnement du réseau d'antennes intégré dans la configuration 45 degrés, pour une fréquence de fonctionnement voisine de 2 GHz.

Dans le cas présent, la direction de l'axe de symétrie LP du lobe principal est située à 45 degrés, l'amplitude du lobe principal est de 1,9 dBi, et l'ouverture du lobe principal, représenté par l'angle $\theta$ correspondant à une atténuation de 3 dB par rapport à l'amplitude du lobe principal, est de 249,2 degrés de part et d'autre du susdit axe de symétrie LP du lobe principal.

Dans l'exemple de la figure 7, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -4 dB par pas de 1 dB ; la fréquence de fonctionnement est quantifiée en abscisse selon une échelle linéaire de part et d'autre de 2 GHz.

La courbe S représente la variation du paramètre S11 dans la bande de fréquence 0,5 GHz à 5 GHz ; la valeur maximum du paramètre S11 est de -3,4 dB au voisinage de 2 GHz.

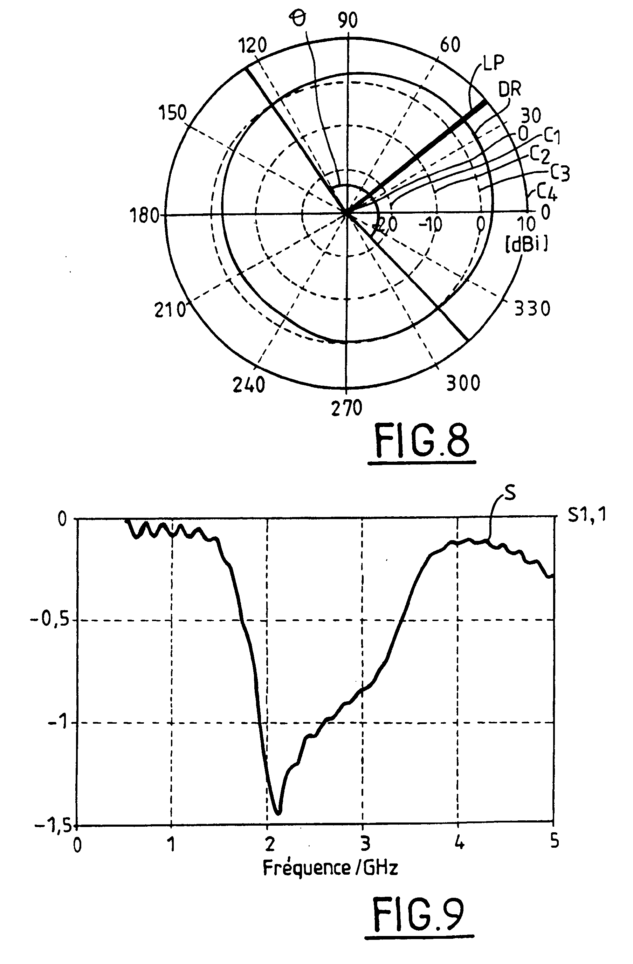

Dans l'exemple représenté sur la figure 8, le repère du diagramme de rayonnement est identique à celui de la figure 2.

Une courbe DR représente le diagramme de rayonnement du réseau d'antennes intégré dans la configuration 50 degrés, pour une fréquence de fonctionnement voisine de 2 GHz.

Dans le cas présent, la direction de l'axe de symétrie LP du lobe principal est située à 40 degrés, l'amplitude du lobe principal est de 3,1 dBi, et l'ouverture du lobe principal, représenté par l'angle 0 correspondant à une atténuation de 3 dB par rapport à l'amplitude du lobe principal, est de 171,9 degrés de part et d'autre du susdit axe de symétrie LP du lobe principal.

Dans l'exemple de la figure 9, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -1,5 dB par pas de 0,5 dB ; la fréquence de fonctionnement est quantifiée en abscisse selon une échelle linéaire de part et d'autre de 2 GHz.

La courbe S représente la variation du paramètre S11 dans la bande de fréquence 0,5 GHz à 5 GHz ; la valeur maximum du paramètre S11 est de - 1,45 dB au voisinage de 2 GHz.

Il faut noter que les valeurs obtenues pour le paramètre S11 ne sont pas satisfaisantes, quelle que soit la direction analysée ; en effet, concernant les quatre configurations analysées, à savoir 0 degré, 20 degrés, 45 degrés et 50 degrés, le paramètre S11 atteint, au voisinage de la fréquence de fonctionnement, c'est-à-dire proche de 2 GHz, -2 à -3 dB ; ce qui signifie qu'une grande partie de la puissance fournie au réseau d'antennes intégré n'est pas reçue.

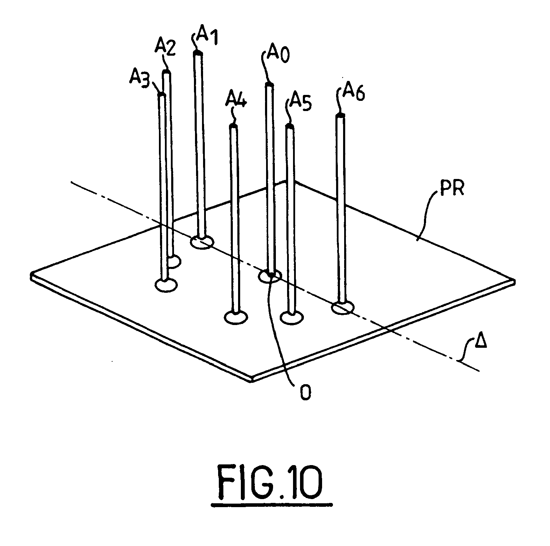

Dans l'exemple représenté sur la figure 10, le dispositif de localisation de véhicule par transmission radiofréquence est représenté schématiquement par un réseau d'antennes intégré selon un deuxième mode de réalisation.

Il est essentiellement constitué d'un plan de référence PR supportant une antenne principale A0 active, et six antennes parasites, respectivement A1, A2, A3, A4, A5, A6.

La susdite antenne principale A0 active est normale au plan de référence PR et située en un point 0 ; les six susdites antennes parasites, respectivement A1, A2, A3, A4, A5, A6 sont également normales au plan de référence PR et situées sur un demi-cercle de rayon r et de centre 0 ; les susdites antennes parasites A1, A6, sont situées sur un grand axe $\Delta$ passant par le centre 0 ; les susdites antennes parasites A2, A3, A4, A5 sont situées sur le demi-cercle de rayon r, de telle sorte que les angles au sommet 0 séparant les susdites antennes A1, A2, A3, A4, A5, A6 soient respectivement égaux à $\pi/6$, $\pi/3$, $2\pi/3$, $5\pi/6$, et $\pi$.

L'antenne principale A0 et les six antennes A1, A2, A3, A4, A5, A6 ont une longueur égale à L.

Ne sont pas représentées sur la figure 10, l'alimentation radiofréquence de l'antenne principale A0, ainsi que les diodes PIN de commutation associées à chacune des susdites antennes parasites A1, A2, A3, A4, A5, A6.

A titre d'exemple, pour une fréquence de fonctionnement de 2,4 GHz, la longueur L est de 31,25 mm, le rayon r est de 15,625 mm; le volume global du réseau d'antennes intégré est de 13,2 $cm^3$.

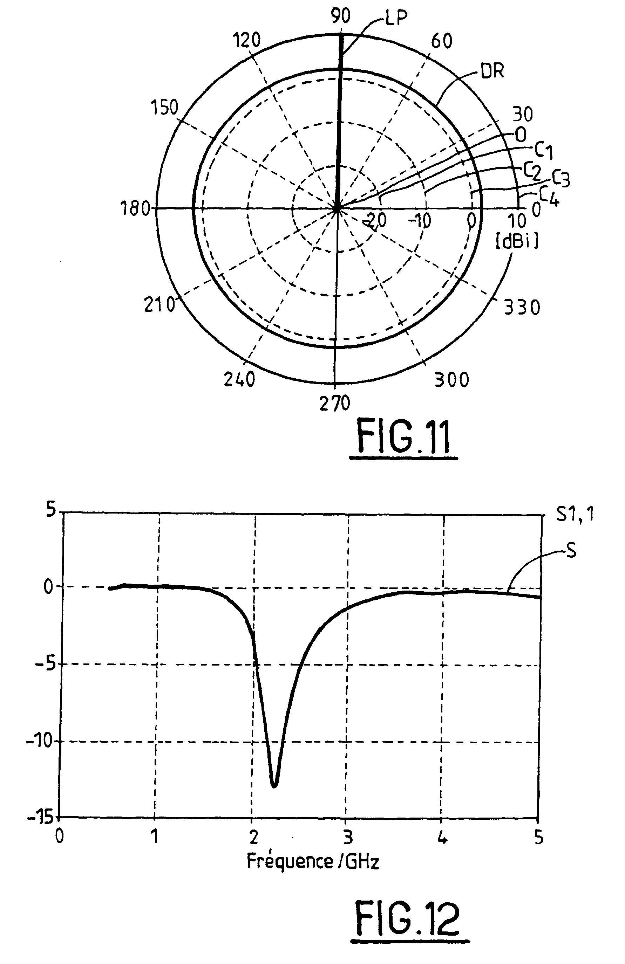

Dans l'exemple représenté sur la figure 11, le repère du diagramme de rayonnement est identique à celui de la figure 2.

Une courbe DR représente le diagramme de rayonnement du réseau d'antennes intégré dans la configuration 0 degré, pour une fréquence de fonctionnement voisine de 2 GHz.

Dans le cas présent, la direction de l'axe de symétrie LP du lobe principal est située à 90 degrés, et l'amplitude du lobe principal est de 2,1 dBi.

Dans l'exemple de la figure 12, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -15 dB par pas de 5 dB ; la fréquence de fonctionnement est quantifiée en abscisse selon une échelle linéaire de part et d'autre de 2 GHz.

La courbe S représente la variation du paramètre S11 dans la bande de fréquence 0,5 GHz à 5 GHz ; la valeur maximum du paramètre S11 est de -13 dB au voisinage de 2 GHz.

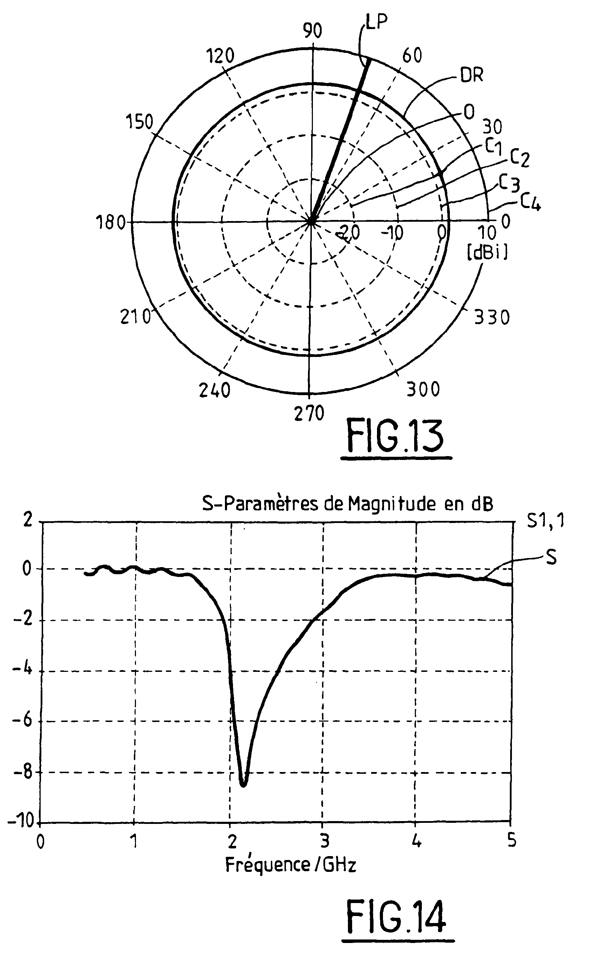

Dans l'exemple représenté sur la figure 13, le repère du diagramme de rayonnement est identique à celui de la figure 2.

Une courbe DR représente le diagramme de rayonnement du réseau d'antennes intégré dans la configuration 20 degrés, pour une fréquence de fonctionnement voisine de 2 GHz.

Dans le cas présent, la direction de l'axe de symétrie LP du lobe principal est située à 70 degrés, et l'amplitude du lobe principal est de 1,7 dBi.

Dans l'exemple de la figure 14, le paramètre S11 (puissance réfléchie/puissance incidente) est représenté en fonction de la fréquence de fonctionnement.

Ainsi, le paramètre S11 est quantifié linéairement en ordonnée selon une échelle allant de 0 à -10 dB par pas de 2 dB ; la fréquence de fonctionnement est quantifiée en abscisse selon une échelle linéaire de part et d'autre de 2 GHz.
La courbe S représente la variation du paramètre S11 dans la bande de fréquence 0,5 GHz à 5 GHz ; la valeur maximum du paramètre S11 est de -8,5 dB au voisinage de 2 GHz.

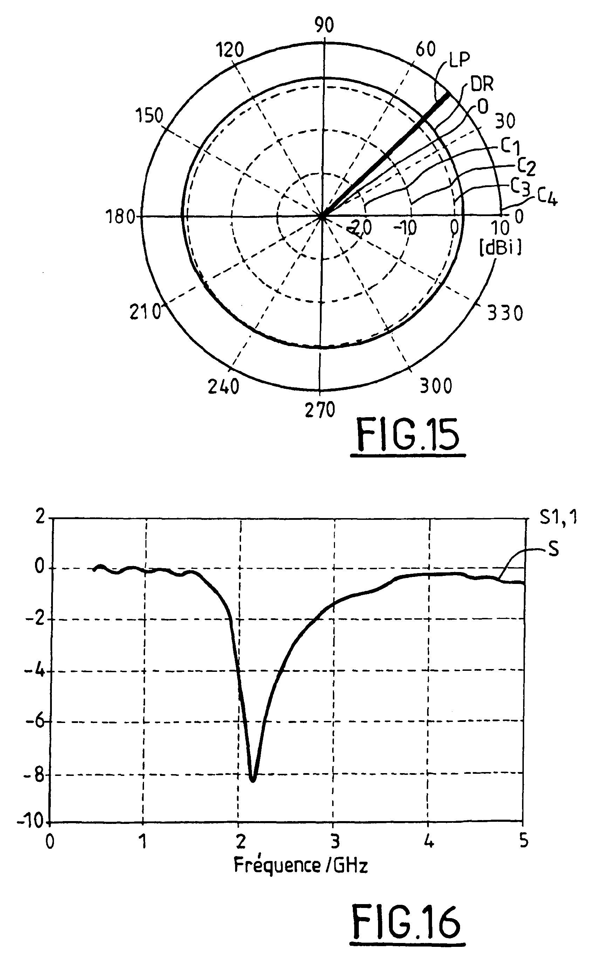

Dans l'exemple représenté sur la figure 15, le repère du diagramme de rayonnement est identique à celui de la figure 2.
Une courbe DR représente le diagramme de rayonnement du réseau d'antennes intégré dans la configuration 45 degrés, pour une fréquence de fonctionnement voisine de 2 GHz.
Dans le cas présent, la direction de l'axe de symétrie LP du lobe principal est située à 45 degrés, et l'amplitude du lobe principal est de 1,6 dBi.

Dans l'exemple de la figure 16, le paramètre S11 (puissance réfléchie/puissance incidente) est représenté en fonction de la fréquence de fonctionnement.
Ainsi, le paramètre S11 est quantifié linéairement en ordonnée selon une échelle allant de 0 à -10 dB par pas de 2 dB ; la fréquence de fonctionnement est quantifiée en abscisse selon une échelle linéaire de part et d'autre de 2 GHz.
La courbe S représente la variation du paramètre S11 dans la bande de fréquence 0,5 GHz à 5 GHz ; la valeur maximum du paramètre S11 est de -8,5 dB au voisinage de 2 GHz.

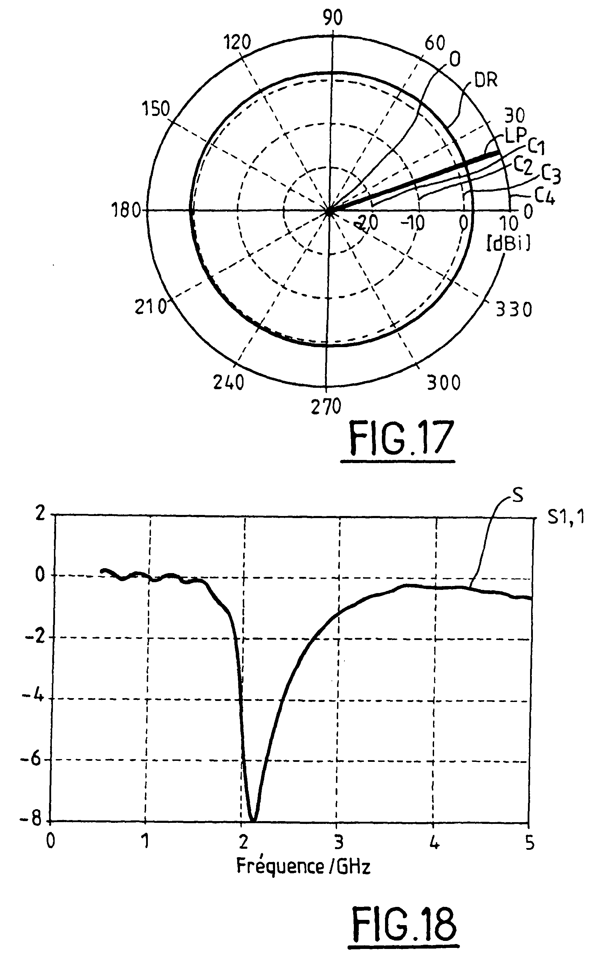

Dans l'exemple représenté sur la figure 17, le repère du diagramme de rayonnement est identique à celui de la figure 2.
Une courbe DR représente le diagramme de rayonnement du réseau d'antennes intégré dans la configuration 70 degrés, pour une fréquence de fonctionnement voisine de 2 GHz.

Dans le cas présent, la direction de l'axe de symétrie LP du lobe principal est située à 20 degrés, et l'amplitude du lobe principal est de 1,7 dBi.

Dans l'exemple de la figure 18, le paramètre S11 (puissance réfléchie/puissance incidente) est représenté en fonction de la fréquence de fonctionnement.
Ainsi, le paramètre S11 est quantifié linéairement en ordonnée selon une échelle allant de 0 à -8 dB par pas de 2 dB ; la fréquence de fonctionnement est quantifiée en abscisse selon une échelle linéaire de part et d'autre de 2 GHz.
La courbe S représente la variation du paramètre S11 dans la bande de fréquence 0,5 GHz à 5 GHz ; la valeur maximum du paramètre S11 est de -8 dB au voisinage de 2 GHz.

Il faut noter que pour ces configurations l'atténuation du lobe principal sur 360 degrés varie faiblement et que par conséquent on ne peut définir une ouverture du lobe principal, représentée par l'angle 0 correspondant à une atténuation de 3 dB par rapport à l'amplitude du lobe principal.
Il faut noter par ailleurs, que les valeurs obtenues pour le paramètre S11 sont satisfaisantes, quelle que soit la direction analysée ; en effet, concernant les quatre configurations analysées, à savoir 0 degré, 20 degrés, 45 degrés et 70 degrés, le paramètre S11 atteint, au voisinage de la fréquence de fonctionnement, c'est-à-dire proche de 2 GHz, une valeur supérieure à -8 dB ; ce qui signifie qu'une grande partie de la puissance fournie au réseau d'antennes intégré est reçue.

Ainsi, le second mode de réalisation, comportant six antennes parasites, donne des résultats, quant au paramètre S11, nettement plus satisfaisants que ceux obtenus avec le premier mode de réalisation ; en effet, dans la direction 0 degré, l'affaiblissement de la puissance réfléchie par rapport à la puissance incidente transmise au réseau d'antennes intégré est de -13 dB, concernant le second mode de réalisation, comparativement à l'affaiblissement obtenu avec le premier mode de réalisation qui n'est que de -2,2 dB.

En conclusion, les deux modes de réalisation présentées ont des avantages divers. En effet le mode de réalisation comportant quatre antennes parasites et un réflecteur permet une bonne directivité, mais ne permet d'explorer que 100 degrés de l'espace et les valeurs du paramètre S11 ne sont pas satisfaisantes ; quant au second mode de réalisation comportant six antennes parasites, il permet d'explorer 140 degrés de l'espace et fournit des valeurs du paramètre S11 satisfaisantes ; toutefois les diagrammes de rayonnement ne présentent qu'une faible directivité ; aucune direction ne présente une puissance inférieure d'au moins 3 dB à la puissance maximale observée.

Ainsi, le dispositif selon l'invention convient à la localisation de véhicule automobile en milieu confiné, et notamment dans des parkings automobiles souterrains grâce à une évaluation de la direction selon laquelle se trouve le véhicule interrogé et de la distance qui sépare l'opérateur du véhicule recherché; cette solution ne nécessite qu'un seul récepteur au niveau de la clé ; elle est indépendante des réseaux sous contrôle d'opérateurs GPS ou de télécommunications, et prend en compte les contraintes d'intégration dans une clé, à savoir l'encombrement, l'autonomie et la puissance de calcul.

## Revendications

1. Dispositif de localisation de véhicule par transmission radio fréquence destiné à connaître la direction selon laquelle le susdit véhicule interrogé se trouve, basée sur l'estimation, par le susdit dispositif, des directions d'arrivée des différentes réflexions du signal en provenance d'une émission radiofréquence omnidirectionnelle générée par un émetteur situé à bord du susdit véhicule et préalablement déclenchée à distance par le susdit dispositif, le susdit dispositif de localisation comprenant un réseau d'antennes intégré, aptes à séparer les M directions d'arrivée correspondantes à M trajets, les M susdites directions étant estimées par un algorithme de localisation de source **caractérisé en ce que** le susdit réseau d'antennes intégré comprend:

- une antenne principale et quatre antennes parasites disposées perpendiculairement à un plan de référence selon un demi-cercle, l'antenne principale étant située au voisinage du centre du demi-cercle, l'angle contenu dans le plan de référence séparant chacune des quatre antennes parasites étant de $\pi/3$,
- un plan dit réflecteur disposé, perpendiculairement au plan de référence, parallèlement au grand diamètre du demi-cercle défini en son centre par l'antenne principale et en ses deux extrémités par les deux antennes parasites extrêmes.

**2.** Dispositif selon la revendication 1, **caractérisé en ce que** les susdites antennes parasites comprennent chacune une diode PIN permettant de positionner l'antenne parasite soit en court-circuit avec la masse du réseau d'antennes soit en circuit ouvert vis-à-vis de la même masse.

**3.** Dispositif selon la revendication 1, **caractérisé en ce que** l'estimation de la direction selon laquelle le susdit véhicule interrogé se trouve est basée sur la méthode dite MUSIC (Multiple Signal Classification) ou sur la méthode dite CAPON.

**4.** Dispositif selon la revendication 1, **caractérisé en ce que** l'estimation de la distance à laquelle se trouve le susdit véhicule interrogé est basée sur la mesure de la puissance radiofréquence reçue par le dispositif en provenance de l'émission radiofréquence omnidirectionnelle générée par l'émetteur situé à bord du véhicule.

**5.** Dispositif selon la revendication 1, **caractérisé en ce que** l'estimation de la distance à laquelle se trouve le susdit véhicule interrogé est basée sur la mesure du temps de propagation de la transmission radiofréquence entre le véhicule et le dispositif.

**6.** Dispositif selon la revendication 1, **caractérisé en ce que** l'estimation de la distance à laquelle se trouve le susdit véhicule interrogé est basée sur la mesure du temps de propagation de la transmission radiofréquence entre le dispositif et le véhicule additionné du temps de propagation de la transmission radiofréquence entre le véhicule et le dispositif.

**7.** Dispositif selon les revendications 5 et 6, **caractérisé en ce que** la susdite mesure du temps de propagation de la transmission radiofréquence est basée sur la synchronisation des horloges du dispositif et du véhicule selon les étapes suivantes consistant à :

- émission par le dispositif d'un top de synchronisation et déclenchement d'un chronomètre à l'instant $t_0$,
- réception du top de synchronisation par le véhicule et émission d'un signal par le véhicule à l'instant $t_1$,
- mémorisation par le dispositif du temps maximum de mise en route de cette émission du signal par le véhicule, soit $\Delta t_v$,
- réception par le dispositif du signal émis par le véhicule et arrêt du chronomètre,
- mesure du temps de propagation $\Delta\tau$ étant égal à $(\Delta t- \Delta t_v)/2$, avec $\Delta t = t_1-t_0$.

**8.** Dispositif selon la revendication 7, **caractérisé en ce que** la susdite mesure du temps de propagation de la transmission radiofréquence basée sur la synchronisation des horloges du dispositif et du véhicule, est mise à jour tout au long de la localisation du véhicule.

## Claims

**1.** Vehicle-location device by radio frequency transmission designed to ascertain the direction in which the abovementioned polled vehicle is to be found, based on the estimation, by the abovementioned device, of the directions of arrival of the various reflections of the signal originating from an omnidirectional radio frequency transmission generated by a transmitter situated on board the abovementioned vehicle and previously triggered remotely by the abovementioned device, the abovementioned location device comprising an integrated array of antennas capable of separating the M directions of arrival corresponding to M paths, the abovementioned M directions being estimated by a source location algorithm **characterized in that** the abovementioned integrated array of antennas comprises:

- one main antenna and four parasitic antennas placed perpendicularly to a reference plane in a semicircle, the main antenna being situated in the vicinity of the centre of the semicircle, the angle contained in the reference plane separating each of the four parasitic antennas being n/3,
- a plane called a reflector plane placed, perpendicularly to the reference plane, parallel to the large diameter of the semicircle defined in its centre by the main antenna and at its two ends by the two end parasitic antennas.

**2.** Device according to Claim 1, **characterized in that** the abovementioned parasitic antennas each comprise a PIN diode making it possible to position the parasitic antenna either in short circuit with the earth of the array of antennas or in open circuit with respect to the same earth.

**3.** Device according to Claim 1, **characterized in that** the estimation of the direction in which the abovementioned polled vehicle is to be found is based on the method called MUSIC (Multiple Signal Classification) or on the method called the CAPON method.

**4.** Device according to Claim 1, **characterized in that** estimation of the distance at which the abovementioned polled vehicle is to be found is based on the measurement of the radio frequency power received by the device from the omnidirectional radio frequency transmission generated by the transmitter on board the vehicle.

**5.** Device according to Claim 1, **characterized in that** the estimation of the distance at which the abovementioned polled vehicle is to be found is based on the measurement of the propagation time of the radio frequency transmission between the vehicle and the device.

**6.** Device according to Claim 1, **characterized in that** the estimation of the distance at which the abovementioned polled vehicle is to be found is based on the measurement of the propagation time of the radio frequency transmission between the device and the vehicle plus the propagation time of the radio frequency transmission between the vehicle and the device.

**7.** Device according to Claims 5 and 6, **characterized in that** the abovementioned measurement of the propagation time of the radio frequency transmission is based on the synchronization of the clocks of the device and of the vehicle according to the following steps consisting of:

- transmission by the device of a synchronizing pulse and triggering of a chronometer at the moment to,
- receipt of the synchronization pulse by the vehicle and transmission of a signal by the vehicle at the moment $t_1$,
- storage by the device of the maximum time for the starting of this transmission of the signal by the vehicle, namely $\Delta t_v$,
- receipt by the device of the signal transmitted by the vehicle and stopping of the chronometer,
- measurement of the propagation time $\Delta\tau$ being equal to $(\Delta t-\Delta t_v)/2$, where $\Delta t = t_1-t_0$.

**8.** Device according to Claim 7, **characterized in that** the abovementioned measurement of the propagation time of the radio frequency transmission based on the synchronization of the clocks of the device and of the vehicle is updated throughout the locating of the vehicle.

**Patentansprüche**

**1.** Vorrichtung zur Fahrzeugortung durch Radiofrequenzübertragung, die dazu bestimmt ist, die Richtung zu erkennen, gemäß der das abgefragte Fahrzeug sich befindet, basierend auf der Schätzung, durch die Vorrichtung, der Ankunftsrichtungen der verschiedenen Reflektionen des von einer ungerichteten Radiofrequenzaussendung stammenden Signals, die von einem an Bord des Fahrzeugs befindlichen Emitter erzeugt und vorher aus der Ferne von der Vorrichtung ausgelöst wird, wobei die Ortungsvorrichtung ein integriertes Antennenetz enthält, das die M Strecken entsprechenden M Ankunftsrichtungen trennen kann, wobei die M Richtungen durch einen Quellenortungsalgorithmus geschätzt werden, **dadurch gekennzeichnet, dass** das integrierte Antennennetz enthält:

- eine Hauptantenne und vier parasitäre Antennen, die lotrecht zu einer Bezugsebene in einem Halbkreis angeordnet sind, wobei die Hauptantenne sich in der Nähe der Mitte des Halbkreises befindet, wobei der in der jede der vier parasitären Antennen trennenden Bezugsebene enthaltene Winkel $\pi/3$ beträgt,
- eine so genannte Reflektorebene, die lotrecht zur Bezugsebene parallel zum großen Durchmesser des Halbkreises angeordnet ist, der in seiner Mitte von der Hauptantenne und an seinen zwei Enden von den zwei äußeren parasitären Antennen definiert wird.

**2.** Vorrichtung nach Anspruch 1, **dadurch gekennzeichnet, dass** die parasitären Antennen je eine PIN-Diode enthalten, die es ermöglicht, die parasitäre Antenne entweder mit der Masse des Antennennetzes kurzgeschlossen oder in offenem Stromkreis gegenüber der gleichen Masse anzuordnen.

**3.** Vorrichtung nach Anspruch 1, **dadurch gekennzeichnet, dass** die Schätzung der Richtung, gemäß der sich das abgefragte Fahrzeug befindet, auf dem so genannten MUSIC-Verfahren (Multiple Signal Classification) oder auf dem so genannten CAPON-Verfahren basiert.

**4.** Vorrichtung nach Anspruch 1, **dadurch gekennzeichnet, dass** die Schätzung der Entfernung, in der sich das abgefragte Fahrzeug befindet, auf der Messung der Radiofrequenzleistung basiert, die von der Vorrichtung von der ungerichteten Radiofrequenzaussendung kommend empfangen wird, die von dem an Bord des Fahrzeugs befindlichen Emitter erzeugt wird.

**5.** Vorrichtung nach Anspruch 1, **dadurch gekennzeichnet, dass** die Schätzung der Entfernung, in der sich das abgefragte Fahrzeug befindet, auf der Messung der Ausbreitungszeit der Radiofrequenzübertragung zwischen dem Fahrzeug und der Vorrichtung basiert.

**6.** Vorrichtung nach Anspruch 1, **dadurch gekennzeichnet, dass** die Schätzung der Entfernung, in der sich das abgefragte Fahrzeug befindet, auf der Messung der Ausbreitungszeit der Radiofrequenzübertragung zwischen der Vorrichtung und dem Fahrzeug basiert, zu der die Ausbreitungszeit der Radiofrequenzübertragung zwischen dem Fahrzeug und der Vorrichtung addiert wird.

**7.** Vorrichtung nach den Ansprüchen 5 und 6, **dadurch gekennzeichnet, dass** die Messung der Ausbreitungszeit der Radiofrequenzübertragung auf der Synchronisierung der Zeitmessgeräte der Vorrichtung und des Fahrzeugs gemäß den folgenden Schritten basiert, die darin bestehen:

- Senden durch die Vorrichtung einer Synchronisationsspitze und Auslösen eines Chronometers im Zeitpunkt $t_0$,
- Empfang der Synchronisationsspitze durch das Fahrzeug und Senden eines Signals durch das Fahrzeug im Zeitpunkt $t_1$,
- Speichern durch die Vorrichtung der maximalen Zeit des Starts dieses Sendens des Signals durch das Fahrzeug, d.h. $\Delta t_v$,
- Empfang durch die Vorrichtung des vom Fahrzeug gesendeten Signals und Anhalten des Chronometers,
- Messen der Ausbreitungszeit $\Delta\tau$ gleich $(\Delta t-\Delta t_v)/2$, mit $\Delta t = t_1-t_0$.

**8.** Vorrichtung nach Anspruch 7, **dadurch gekennzeichnet, dass** die Messung der Ausbreitungszeit der Radiofrequenzübertragung basierend auf der Synchronisation der Zeitmessgeräte der Vorrichtung und des Fahrzeugs während der ganzen Ortung des Fahrzeugs aktualisiert wird.

A1
A0
A4
A2
A3
R
PR
Δ0
0
Δ

FIG.1

90
LP
120
60
θ
0
DR
150
30
C1
C2
C3
C4
180
-20
-10
0
10
0
[dBi]
210
330
240
300
270

FIG.2

0
-0,5
-1
-1,5
-2
-2,5
5
S1,1
0
1
2
3
4
5
Fréquence /GHz

FIG.3

90
Lp
120
60
θ
O
DR
150
30
C1
C2
C3
C4
180
0
-20
-10
0
10
[dBi]
210
330
240
300
270

FIG.4

S
S1,1
0
-0,5
-1
-1,5
-2
-2,5
0
1
2
3
4
5
Fréquence /GHz

FIG.5

θ
90
120
60
LP
DR
150
30
0
C1
C2
C3
C4
180
-20
-10
0
10
[dBi]
210
330
240
300
270

FIG.6

S1,1
S
1
0
-1
-2
-3
-4
0
1
2
3
4
5
Fréquence /GHz

FIG.7

θ
90
120
60
LP
DR
150
30
0
C1
C2
C3
C4
180
-20
-10
0
10
0
[dBi]
210
330
240
300
270
S
0
S1,1
-0,5
-1
-1,5
0
1
2
3
4
5
Fréquence /GHz

FIG.8

FIG.9

A1
A2
A3
A4
A0
A5
A6
PR
Δ
O

FIG.10

90
LP
120
60
DR
150
30
0
C1
C2
C3
C4
0
180
-20
-10
0
10
[dBi]
210
330
240
300
270

FIG.11

5
0
-5
-10
-15
S1,1
S
0
1
2
3
4
5
Fréquence /GHz

FIG.12

LP
90
120
60
DR
150
0
30
C1
C2
C3
C4
180
-20
-10
0
10
0
[dBi]
210
330
240
300
270

FIG.13

S-Paramètres de Magnitude en dB
S1,1
S
2
0
-2
-4
-6
-8
-10
0
1
2
3
4
5
Fréquence /GHz

FIG.14

90
120
60
150
180
210
240
270
300
330
LP
DR
0
30
C1
C2
C3
C4
0
-20
-10
0
10
[dBi]

FIG.15

S1,1
S
2
0
-2
-4
-6
-8
-10
0
1
2
3
4
5
Fréquence /GHz

FIG.16

90
120
60
O
DR
150
30
LP
C1
C2
C3
C4
180
0
-20
-10
0
10
[dBi]
210
330
240
300
270
S
S1,1
2
0
-2
-4
-6
-8
0
1
2
3
4
5
Fréquence /GHz

FIG.17

FIG.18

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 02073562 A
- FR 2805614
- US 6690534 B